# EUROPÄISCHE PATENTANMELDUNG

(11) **EP 1 022 490 A2**
(43) Veröffentlichungstag der Anmeldung: **26.07.2000**
(21) Anmeldenummer: 99124199.3
(22) Anmeldetag: 03.12.1999
(51) Int. Cl.: F16H 37/02

(54) **Stufenloses Fahrzeuggetriebe**

(30) Priorität: 23.01.1999 DE 19902637
(71) Anmelder: Bayerische Motoren Werke Aktiengesellschaft, 80809 München (DE)
(72) Erfinder: Bergmann, Dieter, Dr., 85598 Baldham (DE); Biskup, Ernst, 82223 Eichenau (DE); Pour, Rahim, Dr., 85748 Garching (DE)

(57) **Zusammenfassung**

Die Erfindung beschreibt ein stufenloses Fahrzeuggetriebe mit zwei Umschlingungsgetrieben, die von einer Antriebswelle direkt , das heißt, ohne ein Ausgleichsgetriebe angetrieben werden und deren Übersetzungen getrennt einstellbar sind. Auf diese Weise ist es möglich, höhere Drehmomente zu übertragen. Darüber hinaus laßt sich ein aktives Differential simulieren, mit dem die Fahrzustände des Fahrzeuges beeinflußt werden können.

## Beschreibung

Die Erfindung bezieht sich auf ein stufenloses Fahrzeuggetriebe, wie es im Oberbegriff des Hauptanspruchs beschrieben ist.

### [Stand der Technik]

Stufenlose Fahrzeuggetriebe, die als wesentliches Element ein Umschlingungsgetriebe beinhalten, auch CVT-Getriebe genannt, sind allgemein bekannt und werden in zunehmenden Maße in Kraftfahrzeugen eingesetzt. Allerdings ist wegen der Kraftübertragung durch einen Riemen, Zugkette oder Schubgliederband das übertragbare Drehmoment begrenzt. Es sind des weiteren Getriebe unter dem Namen DAF-Variomatic bekannt geworden, bei denen jedem angetriebenen Fahrzeugrad ein Umschlingungsgetriebe zugeordnet ist. Dabei treibt die das Motordrehmoment übertragende Antriebswelle über ein Ausgleichsgetriebe die Eingangswellen der beiden Umschlingungsgetriebe an. Durch das Ausgleichsgetriebe werden Verspannungen in den beiden Leistungszweigen verhindert. Andererseits aber treten die bekannten Nachteile eines Ausgleichsgetriebes bei unterschiedlichen Reibbeiwerten der Straßenoberfläche in der Form auf, daß das gesamte Drehmoment auf den Getriebezweig mit dem durchdrehenden Rad geleitet wird.

### [Aufgabe der Erfindung]

Aufgabe der Erfindung ist es, ein stufenloses Fahrzeuggetriebe darzustellen, das die Übertragung höherer Drehmomente erlaubt und bei dem die nachteiligen Wirkungen eines Ausgleichsgetriebes vermieden werden.

Die Aufgabe wird erfindungsgemäß mit den Merkmalen des Hauptanspruchs gelöst. Vorteilhafte Ausgestaltungen der Erfindung ergeben sich aus den Unteransprüchen.

Die Erfindung verwendet das im Stand der Technik bekannte Doppel-Umschlingungsgetriebe bei dem die das Motordrehmoment übertragende Antriebswelle die jeweilige Eingangswelle der einzelnen Getriebezweige direkt antreibt, das heißt, es ist kein Ausgleichsgetriebe dazwischengeschaltet. Um dennoch Verspannung zu vermeiden, werden die Übersetzungsverhältnisse der einzelnen Umschlingungsgetriebe unabhängig voneinander eingestellt.

Das erfindungsgemäße Fahrzeuggetriebe läßt sich verschiedenartig verwenden. So kann es bei einer Transaxle-Bauweise im Bereich der angetrieben Hinterräder im Fahrzeug angeordnet sein. Hier treibt jeder Getriebestrang, also jedes Umschlingungsgetriebe direkt ein Hinterrad an. In entsprechender Weise kann bei einem frontgetriebenen Fahrzeug ein vorderer Anbringungsort gewählt werden.

Im Fall eines Allradfahrzeuges läßt es sich als Zwischengetriebe einsetzen. Die zu den Hinter- und Vorderräder führenden Antriebswellen werden dabei jeweils von einem Umschlingungsgetriebe beaufschlagt.

Die Ansteuerung der Umschlingungsgetriebe übernimmt am zweckmäßigsten ein elektronisches Getriebesteuergerät, das Signale über die Fahrzustände und den Fahrerwunsch erhält, und aufgrund der jeweiligen Werte die Getriebeübersetzungen vorgibt. Auf diese Weise läßt sich auch die Funktion eines aktiven Differentials verwirklichen. So kann bspw. durch das Vorgeben unterschiedlicher Übersetzungen eine Differentialsperre mit variabler Drehmomentverteilung simuliert werden und zwar sowohl als Achsdifferential bei einem Heck- oder Fronttrieb als auch als Zentraldifferential bei einem Vierradantrieb.

Ein solches aktives Differential kann auch zur Spurstabilisierung des Fahrzeuges oder zur aktiven Lenkunterstützung herangezogen werden oder ganz allgemein zur Unterstützung aller Systeme für die Stabilisierung des Fahrzeuges.

Als Eingangsgrößen für das elektronische Steuergerät dienen Signale, die die Raddrehzahlen, die Last angebende Gaspedalstellung, die Abtriebsdrehmomente des Fahrzeugmotors, den Lenkeinschlag, die Querbeschleunigung des Fahrzeuges und den Reifendruck der einzelnen Fahrzeugräder wiedergeben.

Schließlich erlaubt die Auslegung des Doppel-Umschlingungsgetriebes eine den vorgegebenen Platzverhältnissen angepaßte Anordnung der einzelnen Getriebewellen.

### [Beispiele]

Weitere vorteilhafte Ausgestaltungen der Erfindung ergeben sich aus der nachfolgenden Beschreibung und der dazu gehörenden Zeichnung. Es zeigen
- Fig. 1: ein erfindungsgemäßes stufenloses Fahrzeuggetriebe in Transaxle-Bauweise für den Antrieb der hinteren Fahrzeugräder,
- Fig. 2: eine ähnliche Ausführung wie in Fig. 1, jedoch als Verzweigungsgetriebe für ein allradgetriebenes Fahrzeug, und
- Fig. 3: ein elektronisches Steuergerät mit den zu- und abgehenden Signalleitungen.

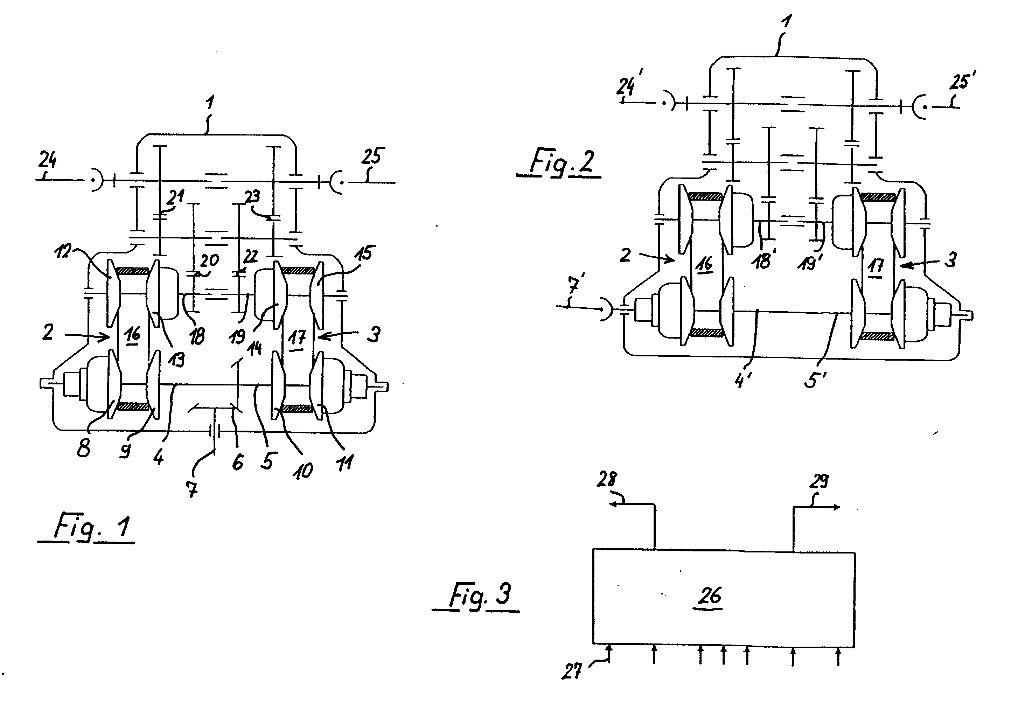

Die in Fig. 1 und 2 dargestellten Fahrzeuggetriebe sind nur in schematischer Weise dargestellt. Soweit sich die Bauteile gleichen, sind sie mit den gleichen Bezugsziffern belegt.

In Fig. 1 ist ein Getriebegehäuse 1 erkennbar, in dem die einzelnen Bauteile untergebracht sind. Die wesentlichen Baugruppen des Getriebes sind dabei zwei parallel zueinander angeordnete Umschlingungsgetriebe 2 und 3, deren Eingangswellen 4 und 5 antriebsmäßig starr miteinander verbunden sind. Sie werden über einen Winkeltrieb 6 von einer Antriebswelle 7 angetrieben. Die Antriebswelle 7 überträgt das von einem Motor, bspw. einer Brennkraftmaschine erzeugte Drehmoment unter Zwischenschaltung einer Anfahrkupplung und einem Rückwärtsgang-Getriebeblock. Diese Baugruppen sind in der Zeichnung nicht dargestellt.

Bei den Umschlingungsgetrieben 2 und 3 handelt es sich um allgemein bekannte, in der Automobiltechnik in den verschiedensten Ausgestaltungen verwendete CVT-Getriebe. Eine vollständige Beschreibung der Arbeitsweise solcher Getriebe ist daher in diesem Zusammenhang nicht notwendig, es genügt vielmehr eine Beschränkung auf die für das Verständnis der Erfindung bezogene Ausgestaltung.

Jede der Eingangswellen 4 und 5 treibt ein erstes Scheibenpaar mit Kegelscheiben 8, 9 und 10, 11 des jeweiligen Umschlingungsgetriebes 2, 3 an. Zur Einstellung der verschiedenen Getriebeübersetzungen läßt sich der axiale Abstand zwischen den Kegelscheiben jedes Scheibenpaars verändern. Jedem ersten Scheibenpaar ist eine zweites Scheibenpaar mit Kegelscheiben 12, 13 und 14, 15 zugeordnet, deren axialer Abstand ebenfalls einstellbar ist. Umschlingungsbänder 16 und 17 übertragen das Drehmoment vom ersten zum zweiten Scheibenpaar.

Mit jedem zweiten Scheibenpaar ist drehfest eine Ausgangswellen 18 ,19 verbunden, die über weitere Zahnradpaare 20, 21 und 22, 23 eine Abtriebswelle 24, 25 antreibt. Dabei führt die Abtriebswelle 24 zu dem nicht dargestellten linken hinteren Fahrzeugrad und entsprechend die Abtriebswelle 25 zu dem rechten hinteren Fahrzeugrad.

Das in Fig. 2 dargestellte Zwischengetriebe eines Vierradantriebs unterscheidet sich von dem Heckgetriebe nach Fig. 1 dadurch, daß eine Antriebswelle 7' direkt mit der Eingangswelle 4' des ersten Umschlingungsgetriebes 2 verbunden ist.

Des weiteren bildet die Eingangswelle 4' in ihrer Verlängerung zugleich auch die Eingangswelle 5' des zweiten Umschlingungsgetriebes 3. Schließlich führen Abtriebswellen 24' und 25'nicht zu einzelnen Rädern, sondern die Abtriebswelle 24' zu den hinteren Fahrzeugrädern und Abtriebswelle 25' zu den vorderen Fahrzeugrädern. Ansonsten unterscheidet sich der Aufbau des Fahrzeuggetriebes nach Fig. 2 nicht von dem nach Fig. 1.

Wie bereits erwähnt und allgemein bekannt, werden die Getriebeübersetzungen der CVT-Getriebe durch Veränderung des axialen Abstandes der Kegelscheiben jedes Scheibenpaars eingestellt. Im vorliegenden Fall übernimmt die Ansteuerung der entsprechender Stellglieder ein elektronisches Steuergerät 26 nach Fig. 3. Über Datenleitungen 27 (in der Fig. 3 ist nur eine stellvertretend für die übrigen mit einer Bezugsziffer belegt) erhält das Steuergerät 26 Informationen über die Drehzahlen der Räder, das Abtriebsdrehmoment des Fahrzeugmotors und das Lastsignal, das sich aus der Stellung des Gaspedals ergibt. Weitere Informationen sind der Lenkeinschlag, die Querbeschleunigung des Fahrzeuges und die Reifendrücke. Soweit notwendig können weitere Größen zugeführt werden.

Aus diesen Informationen ermittelt das Steuergerät 26 die jeweils günstigen Getriebeübersetzung der beiden Umschlingungsgetriebe. Es veranlaßt über eine Datenleitung 28 die Einstellung der Getriebeübersetzung des Umschlingungsgetriebes 2 und über eine Datenleitung 29 die hiervon möglicherweise abweichende Getriebeübersetzung des Umschlingungsgetriebes 3. Durch unterschiedliche Übersetzungen wird auf diese Weise ein aktives Differential simuliert, mit dem die eingangs erwähnte Beeinflussung der Fahrzustände erreicht wird.

### [Bezugszeichenliste]

- 1: Getriebegehäuse
- 2: Umschlingungsgetriebe
- 3: Umschlingungsgetriebe
- 4, 4': Eingangswelle
- 5, 5': Eingangswelle
- 6: Winkeltrieb
- 7, 7': Antriebswelle
- 8: Kegelscheibe
- 9: Kegelscheibe
- 10: Kegelscheibe
- 11: Kegelscheibe
- 12: Kegelscheibe
- 13: Kegelscheibe
- 14: Kegelscheibe
- 15: Kegelscheibe
- 16: Umschlingungsband
- 17: Umschlingungsband
- 18: Ausgangswelle
- 19: Ausgangswelle
- 20: Zahnradpaar
- 21: Zahnradpaar
- 22: Zahnradpaar
- 23: Zahnradpaar
- 24, 24': Abtriebswelle
- 25, 25': Abtriebswelle
- 26: Steuergerät
- 27: Datenleitung
- 28: Datenleitung
- 29: Datenleitung

## Patentansprüche

1. Stufenloses Fahrzeuggetriebe, das eine Drehmomentwandlung und eine Leistungsverzweigung ermöglicht und hierfür zwei Umschlingungsgetriebe aufweist, die von einer zentralen Antriebswelle angetrieben werden, dadurch gekennzeichnet, daß die Eingangswellen (4, 4') der Umschlingungsgetriebe (2, 3) unmittelbar von der Antriebswelle (7, 7') angetrieben werden und die Getriebeübersetzungen der Umschlingungsgetriebe (2, 3) unabhängig voneinander einstellbar sind.

2. Fahrzeuggetriebe nach Anspruch 1, dadurch gekennzeichnet, daß das Drehmoment von der Antriebswelle (7) über einen Winkeltrieb (6) auf die Eingangswellen (4, 5) der Umschlingungsgetriebe (2, 3) übertragen wird.

3. Fahrzeuggetriebe nach Anspruch 1 oder 2, dadurch gekennzeichnet, daß die Ausgangswelle (18, 19) jedes Umschlingungsgetriebes (2, 3) ein ihm zugeordnetes Fahrzeugrad über Räderpaare antreibt.

4. Fahrzeuggetriebe nach Anspruch 1 oder 2, dadurch gekennzeichnet, daß die Ausgangswelle (18') des einen Umschlingungsgetriebes (2) eine zu den hinteren Fahrzeugrädern führende Abtriebswelle (24') und die Ausgangswelle (19') des anderen Umschlingungsgetriebes (3) eine zu den vorderen Fahrzeugrädern führende Abtriebswelle (25') antreibt.

5. Fahrzeuggetriebe nach einem der Ansprüche 1 bis 4, dadurch gekennzeichnet, daß die Getriebeübersetzungen der einzelnen Umschlingungsgetriebe (2, 3) von einem elektronischen Getriebesteuergerät (26) vorgegeben werden.

6. Fahrzeuggetriebe nach Anspruch 5, dadurch gekennzeichnet, daß das Getriebesteuergerät (26) durch Signale (Datenleitungen 27), die den Fahrzustand und/oder Fahrerwunsch wiedergeben, gesteuert wird.

7. Fahrzeuggetriebe nach Anspruch 6, dadurch gekennzeichnet, daß das Getriebesteuergerät (26) als Eingangsgrößen wenigstens die Drehzahl der Räder, das Lastsignal, die Abtriebsdrehmomente des Fahrzeugmotors, der Lenkeinschlag, die Querbeschleunigung des Fahrzeuges und den Zustand der Reifendrücke verarbeitet und die Getriebeübersetzung jedes Umschlingungsgetriebes (2, 3) ermittelt.
